# EUROPÄISCHE PATENTANMELDUNG

(11) **EP 4 006 206 A1**
(43) Veröffentlichungstag der Anmeldung: **01.06.2022**
(21) Anmeldenummer: 20210199.4
(22) Anmeldetag: 27.11.2020
(51) Int. Cl.: C25B 1/04, C25B 9/00, F02M 21/00, F02M 25/12, C25B 9/73, C25B 9/75, C25B 15/08

(54) **VORRICHTUNG ZUR ANREICHERUNG DER ANSAUGLUFT VON VERBRENNUNGSMOTOREN MIT DEM MISCHGAS EINER ELEKTROLYSEZELLE**

(71) Anmelder: Intergreentech GmbH, 89155 Erbach (DE); Sauer, Harald G.S., 88138 Sigmarszell (DE); Braunsteffer, Sen., Josef, 89155 Erbach (DE)
(72) Erfinder: SAUER, Harald G. F., 89584 Ehingen (DE); BRAUNSTEFFER, Josef sen., 89155 Erbach (DE)
(74) Vertreter: Riebling, Peter

(57) **Zusammenfassung**

Vorrichtung zur Anreicherung der Ansaugluft (9) von Verbrennungsmotoren durch Einführung eines aus einer Elektrolysezelle (20) gewonnenen Mischgases das aus Wasserstoff und/oder Sauerstoff besteht, das in den Luft-Ansaugstutzen (6) des Verbrennungsmotors einleitbar ist, wobei die Elektrolysezelle (20) mindestens eine mit einer Elektrolytflüssigkeit gefüllte Elektrolysekammer (27) mit mindestens einem bestromten Plattenpaket (45) aufweist, deren Gasauslass in eine Gaswäscher-Kammer (31) mündet und wobei der Füllstand (61) in der Elektrolysezelle (20) mit einer im Gehäuse angeordneten Flüssigkeits-gefüllten Vorratskammer (32) geregelt ist, wobei mindestens die Elektrolysekammer (27), die Gaswäscherkammer (31) und die Vorratskammer (32) in einem gegen den Berstdruck einer internen Explosion geschützten Metall- oder faserverstärktem Kunststoffgehäuse (16, 17, 18, 52) aufgenommen sind.

## Beschreibung

Die Erfindung betrifft eine Vorrichtung zur Anreicherung der Ansaugluft von Verbrennungsmotoren mit dem Mischgas einer Elektrolysezelle nach dem Oberbegriff des Patentanspruches 1. Eine derartige Vorrichtung ist ähnlicher Ausführung beispielsweise mit dem Gegenstand der Druckschriften DE102019107872 A1, CN101975108A, US6311648B1 oder DE102004027433A bekannt geworden.

Eine Vorrichtung mit einer 1-Kammer-Elektrolysezelle ist beispielsweise mit der DE202005003509 U1 bekannt geworden. Die genannte Vorrichtung zeigt einen Gasgenerator zur Erzeugung eines Wasserstoff-Sauerstoff-Mischgases, umfassend eine mit einem wasserhaltigen Elektrolyten gefüllte Elektrolysezelle, die einen Plattenstapel aus mehreren parallel zueinander angeordneten, elektrisch leitfähigen Elektrodenplatten aufweist, wobei jede der Elektrodenplatten zu jeder ihrer benachbarten Elektrodenplatte einen definierten Elektrodenabstand besitzt, der mittels eines im Bereich der Plattenränder zwischen den benachbarten Elektrodenplatten angeordneten elektrisch isolierenden Abstandshalter eingestellt ist, wobei der Elektrodenabstand der zueinander parallel angeordneten Elektrodenplatten ein bestimmtes Maß aufweist.

Die genannte Vorrichtung dient zur Ansaugluftanreicherung einer Verbrennungskraftmaschine und weist neben dem Gasgenerator eine Gaszuführleitung zur Zuführung des Wasserstoff-Sauerstoff-Mischgases in einen Ansaugtrakt der Verbrennungskraftmaschine auf. Das für die Elektrolyse verwendete Gefäß weist jedoch keinen Schutz gegen Bersten des Gefäßes aufgrund einer internen Explosion auf. Wegen der Verwendung eine 1-Kammer-Systems ist es notwendig, die anderen Kammern außerhalb des 1-Kammer-Gefäßes anzuordnen, was vibrations- und bruchanfällige Leitungsverbindungen erfordert.

Beim Einbau in Kraftfahrzeuge hat sich herausgestellt, dass eine 1-Kammer-Elektrolysezelle nicht die erforderliche Betriebssicherheit erbringt, wie sie beim Betrieb von Kraftfahrzeugen notwendig ist und wie sie von der Zulassungsbehörde und dem TÜV gefordert wird.

Bei einem Gasgenerator nach der DE 10 2019 107 872 A1 hat sich herausgestellt, dass der Gasgenerator nicht explosionsgeschützt ist, weil die verwendeten Dichtungen unzureichend sind und wegen der 1-Kammer-Ausführung eine gedrängte, kleinvolumige Bauweise nicht möglich war, die zu einem verbesserten Explosionsschutz führt.

Die US 5 733 421 B1 beschäftigt sich bereits mit dem Problem der Explosionssicherheit derartiger Elektrolysezellen beim Einbau in ein Kraftfahrzeug und zeigt ein aus einem durchsichtigen Kunststoff bestehendes, gekapseltes Mehrkammer-System bestehend aus einer Füllstand-geregelten Elektrolysekammer, deren Gasauslass in einen davon getrennten Gassammelraum führt, von dem aus das Gas in eine flüssigkeitsgefüllte Kammer geleitet wird, die als Gaswäscher und Explosionsschutzraum ausgebildet ist. Das in dieser Kammer gereinigte Gas wird in einem Sammelraum dieser Kammer aufgenommen und kann aus dieser Kammer über einen Auslassstutzen entnommen werden. Die Wasserzuführung erfolgt über einen Vorratstank, der im Gehäuse des Gasgenerators eingebaut ist und der von Zeit zu Zeit - je nach Wasserverbrauch der Elektrolysezelle - von Hand aufgefüllt werden muss. Der Explosionsschutz dieser Vorrichtung besteht darin, dass der Deckel der flüssigkeitsgefüllten Explosionsschutzkammer im Fall einer Explosion abgesprengt wird und dabei einen elektrischen Kontakt unterbricht, um so die Stromzuführung an die Vorrichtung zu unterbrechen. Damit ist allerdings der Nachteil verbunden, dass im Fall der Explosion auch die Gefahr besteht, dass die aus einem durchsichtigen Kunststoff bestehenden weiteren Kammerwände beschädigt werden und das Elektrolyt ausläuft. Zudem ist eine Kreislaufführung der Elektrolytflüssigkeit nicht vorhanden und das Vorratswasser muss von Hand eingefüllt werden, was den Bedienungsaufwand einer solchen Vorrichtung stark erhöht. Ein automatischer Betrieb, der ohne Eingriff der menschlichen Hand möglich ist, ist daher nur von kurzer Dauer möglich.

Der Erfindung liegt deshalb die Aufgabe zugrunde, eine Vorrichtung gemäß der US 5 733 421 B1 so weiterzubilden, dass ein explosionsgeschützter Gasgenerator ermöglicht wird, der im kontinuierlichen Betrieb ohne der Notwendigkeit eines Handeingriffs mit verbesserter Betriebssicherheit betrieben werden kann und dessen Konstruktion und Betriebsweise zulassungsfähig für den Einbau in Kraftfahrzeuge ist.

Zur Lösung der gestellten Aufgabe ist die Erfindung durch die technische Lehre des Anspruches 1 gekennzeichnet.

Dabei ist von besonderem Vorteil, wenn mindestens die Elektrolysekammer, die Gaswäscherkammer und die Vorratskammer in einem druckdichten, explosionsgeschützten Metall- oder faserverstärkten Kunststoffgehäuse aufgenommen sind. Die Erfindung sieht deshalb nach einem bevorzugten Merkmal die Ausführung der Elektrolysezelle als Mehrkammer-System mit einem gegen den Berstdruck einer internen Explosion gesicherten Gefäß vor.

Es wird bevorzugt, wenn das Gehäuse oder Gefäß entweder kästen- oder topfförmig ausgebildet ist und bevorzugt aus einem hochbelastbaren Edelstahlmaterial oder einem aus Kohlefaser verstärktem Kunststoffgehäuse besteht, sodass eine eventuell im Innenraum stattfindende Explosion nicht nach außen dringt und Teile des Kraftfahrzeuges im Einbauraum beschädigt. Die Dicke des hochbelastbaren Edelstahlmaterials sollte auf den zu erwartenden Berstdruck abgestimmt sein und liegt bevorzugt im Bereich zwischen 5 bis 10 mm. Ein faserverstärktes Kunststoffgehäuse hat eine bevorzugte Dicke im Bereich zwischen 8 bis 15 mm.

Ferner wird es bevorzugt, wenn sämtliche Wände des metallischen Gehäuses - mit Ausnahme der Deckplatte - metallisch dicht miteinander verschweißt sind und die Deckplatte mit hochbelastbaren Schrauben und einer geeigneten Dichtung mit dem nach oben offenen kästen- oder topfförmigen Gehäuse verschraubt ist. Statt der Herstellung des Metallgehäuses aus verschweißten Metallplatten, kann ein topfförmiges Metallgehäuse auch im Tiefziehverfahren hergestellt werden. Ein faserverstärktes Kunststoffgehäuse wird aus aushärtenden Kunststofflagen laminiert oder im 3D-Druckverfahren gedruckt. Das Gehäuse des so gebildeten Gasgenerators ist demnach so dimensioniert, dass eine interne Explosion, die allerdings unwahrscheinlich ist, nicht zu einem Platzen des Gehäuses führt, wie es bei der US 5 733 421 B1 in Kauf genommen wird.

Weiteres bevorzugtes Merkmal der Erfindung ist, dass die erfindungsgemäße Elektrolysezelle bevorzugt aus 4 Kammern besteht und - im Vergleich zum Stand der Technik - relativ kleinvolumig ausgebildet ist, um größere Gasansammlungen im Gehäuse zu vermeiden. Wegen der geringeren, vorhandenen Gasmenge wird eine verbesserter Berstschutz ermöglicht. Ein bevorzugtes Volumen eines solchen Gehäuses liegt im Bereich zwischen 1,5 Liter bis 2,5 Liter. Daraus ergibt sich, dass nur relativ geringe Gasmengen im Gehäuse vorhanden sind und dadurch nur die Gefahr kleinvolumiger Gasexplosionen besteht, die von den angegebenen Gehäusen gut beherrscht werden können.

Eine Explosion kann ohnedies nur im Luftraum der mittleren Elektrolysekammer stattfinden und nachdem diese Elektrolysekammer nach beiden Seiten hin durch hydrostatische Säulen in Richtung auf die Gaswäscherkammer und in Richtung auf die Bodenkammer abgeschlossen ist, besteht nur eine geringe Gefahr, dass eine Druckwelle nach außen außerhalb des Mehrkammer Systems gelangt.

Zum Schutz gegen Gasexplosionen dient auch ein in das Mehrkammer-System hineinragender Drucksensor, der bei Überschreitung eines vorgegebenen Druckwertes die Gaserzeugung ausschaltet. sodass eine vom Überdruck gesteuerte Zwangsabschaltung der Stromversorgung der Elektrolysezelle vorhanden ist.

Versuche haben ergeben, dass im Fall einer unerwünschten Explosion diese nur für die Dauer von 14 Nanosekunden abläuft und darauf folgend eine für eine Dauer von 40 Millisekunden anhaltende Implosion stattfindet, die der Explosionswelle entgegenwirkt und daher die Druckwelle mit dem hohen Berstdruck auflöst. Aufgrund dieser Erkenntnis wird ein unzulässiger Überdruck in der Elektrolysekammer durch die sich an die Elektrolysekammer anschließenden hydrostatischen Säulen begrenzt, sodass eine solche kurzzeitige Überdruckwelle nicht nach außen gelangen kann.

Wegen der kleinvolumigen Ausführung des Mehrkammersystems sollte für eine dauernde Gaserzeugung bei geringer Explosionsgefahr gesorgt werden. Dazu gehört auch, dass die zur Flüssigkeitsversorgung des Mehrkammersystems notwendigen, weiteren Komponenten ein automatisches Kreislaufsystem beinhalten, das dafür sorgt, dass die zur Elektrolyse notwendigen Flüssigkeiten ständig im Kreislauf aus dem Mehrkammersystem abgeführt und neue Flüssigkeiten zugeführt werden. Durch die externe Installation eines Kreislaufsystems können die Kammervolumina klein gehalten werden und es ist ein ständiger Flüssigkeitskreislauf vorhanden, der einen automatischen, autarken Betrieb des Mehrkammersystems ermöglicht, ohne dass ein Eingriff der menschlichen Hand erforderlich ist, wie es bei der US 5 733 421 B1 der Fall ist.

Teil des Mehrkammersystems ist die Elektrolysekammer, in welcher das mit der Elektrolyseflüssigkeit durchströmte, Strom beaufschlagte Plattenpaket angeordnet ist, wobei die Bodenseite des von der Elektrolyseflüssigkeit durchströmten Plattenpakets flüssigkeitsleitend mit dem Inhalt einer Bodenkammer verbunden ist, in welche die Elektrolyseflüssigkeit eingangsseitig hineinfließt. Damit wird der Vorteil erreicht, dass die mit Gasblasen angereicherte Elektrolyseflüssigkeit ständig an den strombeaufschlagten Platten entlanggeführt wird, um eine Anreicherung der Elektrolyseflüssigkeit mit Gas zu vermeiden. Damit ist auch eine besonders gedrängte Bauweise möglich.

Ferner ist in der Elektrolysezelle neben und etwa auf gleicher Höhe wie die Elektrolysekammer eine Vorratskammer angeordnet, die ebenfalls eine flüssigkeitsleitende Verbindung durch die Oberwand der Bodenkammer hindurch mit dem Inhalt der Bodenkammer aufweist. Die Vorratskammer kontrolliert den Flüssigkeitsstand der Elektrolyseflüssigkeit in der gesamten Elektrolysezelle mit geeigneten Regel- und Sensorvorrichtungen.
Alle Regel- und Sensorvorrichtungen sind drucksicher und explosionsgeschützt ausgelegt.

Weiterhin ist in Fließverbindung mit dem oberen Ausströmende der Elektrolysekammer eine im Gehäuse angeordnete Gaswäscherkammer angeordnet, in welcher die Abtrennung der in der Elektrolysekammer erzeugten Gas- und Schaumblasen erfolgt. Am Ausgang der Gaswäscherkammer entströmt das Mischgas und wird bevorzugt in einer nachgeschalteten Behandlungsvorrichtung weiter gereinigt und aufbereitet, wobei die Behandlungsvorrichtung bevorzugt außerhalb des explosionsdruckdichten Gehäuses angeordnet ist.

Mit der gegebenen technischen Lehre ergibt sich der Vorteil, dass ein Mehrkammersystem vorgeschlagen wird, welches bevorzugt aus 4 Kammern (Bodenkammer, Elektrolysekammer, Vorratskammer und Gaswäscherkammer) besteht, die in einem gegen den Berstdruck einer Explosion geschützten Gehäuse integriert sind.

Dabei kann es in einer Weiterbildung der Erfindung vorgesehen sein, dass im Leitungsverlauf der zu- und abführenden Leitungen geeignete Rückschlagventile angeordnet sind, welche bei der Einwirkung eines Explosionsdrucks selbsttätig schließen, ansonsten aber die Medien frei fließen lassen. Statt passiver Rückschlagventile können auch elektrisch oder elektromagnetisch angesteuerte Schnellschlussventile vorhanden sein, die von einem Drucksensor gesteuert sind, der zeitgleich auch die Stromzufuhr zum Plattenpaket unterbricht.

Bei der Anordnung einer zusätzlichen Bodenkammer als integraler Bestandteil des Gehäuses besteht der Vorteil, dass die Bodenseite des Plattenpakets in der Elektrolysezelle an der Einströmseite der Bodenkammer angeordnet werden kann. Neben der Platzersparnis besteht der weitere Vorteil, dass in der Bodenkammer selbst noch zusätzliche Elektrolyseflüssigkeitsbehandlungsvorrichtungen angeordnet werden können, insbesondere Anregungsapparate, welche die Elektrolyseflüssigkeit in bestimmter Weise konditionieren können, um die Wirksamkeit der Elektrolyse zu steigern. Die Bodenkammer dient deshalb nicht nur der Zuführung der Elektrolytflüssigkeit in die Elektrolysekammer und in die Vorratskammer, sondern nimmt noch zusätzliche Behandlungsvorrichtungen zur Vorbehandlung der dort einlaufenden Elektrolytflüssigkeit auf. Damit sind auch diese Behandlungsvorrichtungen in den explosionsgeschützten Aufbau der Elektrolysezelle integriert.

Auf diese Weise ist es zum Beispiel möglich, mit einem in der Bodenkammer angeordneten Piezoelement oder einem Block aus Piezoelementen eine zusätzliche Erregung der Elektrolytflüssigkeit vor Einströmung in das Plattenpaket der Elektrolysekammer vorzusehen, was bisher beim Stand der Technik nicht möglich war.

Alternativ oder zusätzlich kann auch in der Bodenkammer eine Magnetanregung der Elektrolytflüssigkeit stattfinden, wobei ein oder mehrere stromdurchflossene Magnetspulen in der Bodenkammer angeordnet sind, um so eine zusätzliche magnetische Behandlung der in der Bodenkammer einfließenden Elektrolytflüssigkeit zu ermöglichen. Damit wird eine zusätzliche Verbesserung der Wirksamkeit der in der Elektrolysekammer im Plattenpaket stattfindenden Elektrolyse erreicht.

Statt der erwähnten Magnetspulen, die mit einem Signalstrom bestromt werden können, können auch Permanentmagnete in der Bodenkammer eingebaut sein.

Ein Vorteil der Erfindung liegt darin, dass die Gaswäscherkammer, die an der Ausströmseite des Plattenpaketes flüssigkeitsleitend angeschlossen ist, Teil des Gehäuses der Elektrolysezelle ist, so dass auch die in der Gaswäscherkammer stattfindende Gaswäsche und Schaumbeseitigung im explosionsdichten Gehäuse der Elektrolysezelle stattfindet und nicht außerhalb in einem davon getrennten Gefäß.

Damit ergibt sich ein besonders gedrängter und betriebssicherer Aufbau einer Elektrolysezelle, weil mit dem Gaswäscher, der in Form der Gaswäscherkammer in der Elektrolysezelle integriert ist, eine erste Gaswäsche und Schaumbeseitigung stattfindet. Damit ist der Vorteil verbunden, dass nach dieser ersten Gaswäsche noch eine zweite, hydrostatisch getrennte Stufe außerhalb des Gehäuses in Form einer Behandlungsvorrichtung angeschlossen werden kann, die ebenfalls als Gaswäscher und als Abscheider für Wasserdampf und zusätzlich als Flammenrückschlagvorrichtung ausgebildet ist.

In einer Weiterbildung der Erfindung kann jedoch diese zweite Stufe in Form der nachgeschalteten Behandlungsvorrichtung ebenfalls im explosionsgeschützten Gehäuse der Elektrolysezelle angeordnet sein. Es handelt sich dann um ein 5-Kammersystem.

Mit der Integration einer der Gas- und Schaumwäsche dienenden Gaswäscherkammer im Gehäuse der Elektrolysezelle wird die Explosionsgefahr wesentlich verringert, weil eine kammerinterne Vorbehandlung des Gases mit einer Schaumvernichtung direkt in der Kammer der Elektrolysezelle stattfindet und eine in Serie dahinter geschaltete weitere Nachbehandlung der Elektrolyseflüssigkeit mit einer weiteren Gaswäsche außerhalb der Elektrolysezelle stattfinden kann.

Es findet also bevorzugt eine doppelte Abtrennung von Schaumpartikel und Gasblasen statt, wobei die erste Abtrennungsstufe in der Elektrolysezelle selbst integriert ist und die zweite Abtrennstufe als Behandlungsvorrichtung außerhalb angeordnet ist, was die Explosionsgefahr wesentlich vermindert.

Nach einem weiteren bevorzugten Merkmal der Erfindung ist ein Kreislaufsystem vorgesehen, welches die Elektrolyseflüssigkeit pumpengestützt im Kreislauf fördert. Eine Kreislaufförderung ist zwar ebenfalls aus der DE 10 2019 107 872 A1 bekannt, jedoch wurde dort die Elektrolyseflüssigkeit schwerkraftbedingt umgewälzt, ohne dass Pumpen und sonstige Antriebsorgane verwendet wurden. Damit bestand der Nachteil einer ungenügenden Füllstandskontrolle in der Elektrolysezelle und das Fehlen der Steuerung der Gasentwicklung in Abhängigkeit von den unterschiedlichen Fahrbetriebsarten des Kraftfahrzeuges.

Hier setzt die Erfindung nach einem weiteren bevorzugten Merkmal an, welches vorsieht, dass die in der Elektrolysezelle vorhandene Elektrolyseflüssigkeit über ein elektrisch gesteuertes Ventil und eine Pumpe in der Elektrolysezelle füllstandgesteuert umgewälzt wird, wodurch die Betriebssicherheit erhöht wird, weil damit eine flüssigkeitsstandgesteuerte Elektrolysezelle verwirklicht ist und eine unerwünschte Überdruckbefüllung der Elektrolysezelle mit Elektrolyseflüssigkeit vermieden wird. Damit kann die erfindungsgemäße Elektrolysezelle autark und ohne Eingriff von menschlicher Hand betrieben werden, denn die zum Betrieb notwendigen Füllstände der Flüssigkeiten werden sensorgesteuert erfasst und über geeignete, geregelte Pumpen nachgeliefert.

Nach einem weiteren bevorzugten Merkmal der Erfindung ist vorgesehen, dass die, der Elektrolysezelle nachgeschaltete Behandlungsvorrichtung einen Gaswäscher mit einer Flammenrückschlagsicherung aufweist. Dabei ist ein Wasserbad vorhanden, dessen Oberseite einen oberen Gasraum bildet, über welchen das zu entnehmende Gas in einen Gasanschluss einströmt und von einer Gaspumpe in den Ansaugtrakt der Verbrennungsmaschine eingespeist wird.

Durch die Anordnung eines oberen Gasraumes in der Behandlungsvorrichtung wird erreicht, dass Wasseranteile und Schaumpartikel nicht in den Ansaugtrakt der Verbrennungsmaschine gelangen.

Ferner ist es nach einer weiteren bevorzugten Ausgestaltung vorgesehen, dass das Wasserbad in der Behandlungsvorrichtung füllstandgesteuert ist und eine Rückführung des dort abgeschiedenen Wassers in einen eingangsseitig vorhandenen Vorratstank erfolgt, in dem das Wasser aufbewahrt wird und jeweils entsprechend dem Füllstand der Elektrolyseflüssigkeit in der Elektrolysezelle als Frischwasser in die Elektrolysezelle eingespeist wird.

Das Wasser in der Elektrolysezelle verbraucht sich aufgrund der Elektrolysevorgänge, und deshalb wird Wasser aus einem externen Vorratstank pumpen- und füllstandgesteuert in den Kreislauf der Elektrolysezelle eingespeist, wobei die Wasserzufuhr in den Vorratstank aus der Rückführung des in der Behandlungsvorrichtung abgeschiedenen Wassers besteht.

In einer anderen Ausführung kann des Überschußwasser der Behandlungsvorrichtung auch ins Freie abgelassen werden.

Im Falle der Wasserrückführung kann das Mehrkammersystem ohne externe Zufuhr von Frischwasser und ohne Eingriff der menschlichen Hand für einen langen Zeitraum autark betrieben werden. Nachdem auch bei einer Wasserrückführung in den Vorratstank auf 1000 km Fahrtstrecke etwa 1 Liter Wasser verbraucht wird, muss der Vorratstank regelmäßig von Zeit zu Zeit nach einer Fahrtstrecke von zum Beispiel 5000 km befüllt werden. Die Nachfüllintervalle richten sich nach dem Fassungsvermögen des Vorratsbehälters, der vorzugweise ein Füllvolumen zwischen 1 bis 5 Liter aufweist.

Dabei ist noch vorgesehen, dass beim Abschalten des Systems der Füllstand des Mehrkammersystems automatisch auf den maximalen Füllstand gebracht wird. Die Elektrolyseflüssigkeit hat einen deutlich geringeren Gefrierpunkt als das Wasser im Vorratsbehälter. Somit ist die Elektrolysezelle auch für einen Winterbetrieb geeignet, weil sie ständig auf maximalem Füllstand mit der Elektrolyseflüssigkeit gefüllt ist und die Gefahr des Einfrierens im Winter auch bei tiefen Temperaturen nicht besteht.

Der mit dem leicht gefrierfähigen Frischwasser gefüllte Vorratsbehälter kann dabei elektrisch oder vom Kühlkreislauf des Kraftfahrzeuges geheizt werden.

Nach einem weiteren bevorzugten Merkmal besteht die Elektrolysezelle mit dem in der Elektrolysekammer angeordneten Plattenpaket aus einem hermetisch dichten und drucksicheren, bevorzugt aus Edelstahl oder faserverstärktem Kunststoff ausgebildeten kastenförmigen oder zylindrischen und explosionsgeschützten Gehäuse, was ein wesentlicher Vorteil gegenüber dem Stand der Technik gemäß der gattungsbildenden US 5 733 421 A ist. Die genannte Druckschrift offenbart nämlich lediglich ein durchsichtiges Kunststoffgefäß, dessen Explosionsschutz aus einem absprengbaren Deckel besteht.

Hier setzt die Erfindung ein, die vorsieht, dass in einer ersten bevorzugten Ausführung das Gehäuse aus einem hermetisch dicht abgeschlossenen topf- oder kastenförmigen Metallgehäuse besteht, wobei die Gehäusewände bevorzugt dicht miteinander verschweißt sind oder werkstoff-einstückig im Tiefziehverfahren geformt sind, und vorzugsweise aus einer hochfesten Metalllegierung bevorzugt Edelstahl bestehen und somit einen nach oben offenen Topf oder Kasten bilden, der durch einen ebenfalls aus Edelstahl ausgebildeten Deckel oder Deckwand abgeschlossen ist, wobei geeignete Dichtungen am Umfangsbereich zwischen dem topfförmigen Gehäuse und dem Deckel vorhanden sind, die so verschraubt sind, dass eine überlegener Schutz gegen Bersten im Fall einer internen Explosion gegeben ist.

In einer zweiten Ausführung kann das metallische Gehäuse durch ein faserverstärktes Kunststoffgehäuse ersetzt sein, das ebenfalls kästen- oder zylinderförmig ausgebildet ist.

In einer dritten Ausführung kann das Gehäuse auch aus einem Kunststoff bestehen, und das Gehäuse im 3D-Druckverfahren hergestellt ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert das Anschlussschema eines Gasgenerators nach der Erfindung mit dem Anschluss an einen Verbrennungsmotor
- Figur 2:: schematisiert die Verfahrensführung des Gasgenerators nach Figur 1
- Figur 3:: der Gehäuseaufbau der Elektrolysezelle, die Teil des Gasgenerators ist
- Figur 4:: Vertikalschnitt durch die Anordnung nach Figur 3
- Figur 5:: Horizontalschnitt durch die Anordnung nach Figur 3
- Figur 6:: eine schematisierte perspektivische Ansicht der Elektrolysezelle in der gleichen Art wie Figur 4

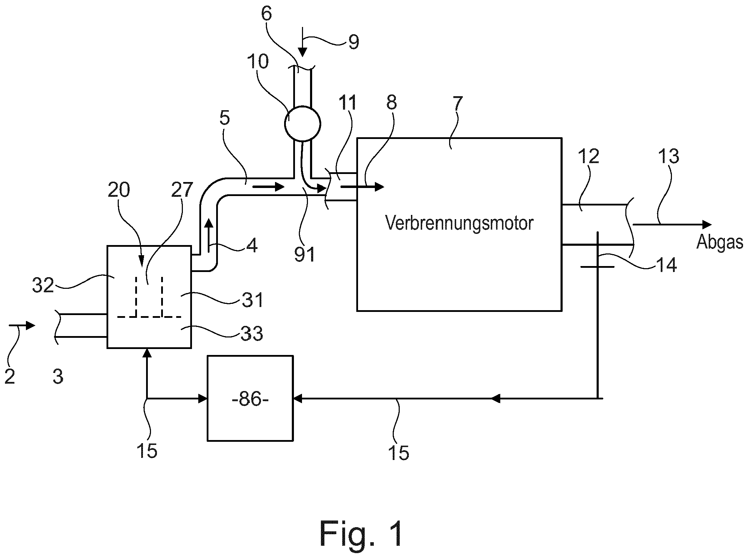

Gemäß der schematisierten Überblickszeichnung in Figur 1 besteht der Gasgenerator 1 im Wesentlichen aus einer ein Mischgas HHO erzeugenden Elektrolysezelle 20, wobei Wasser über den Einfüllstutzen 3 in Pfeilrichtung 2 in ein Mehrkammer-System eingefüllt wird. Die in der explosionsgeschützten Elektrolysezelle 20 angeordneten Kammern 31, 32, 33 sind lediglich schematisiert dargestellt.

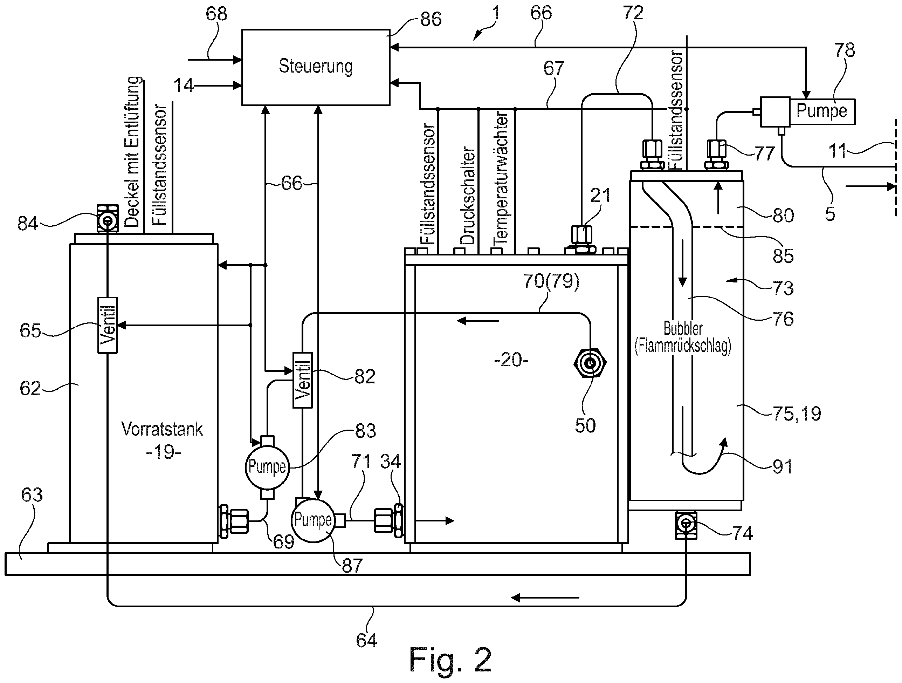

Gemäß dem Verfahrensschema nach Figur 2 bildet sich im Innenraum des Gasgenerators 1 das Mischgas, welches in Pfeilrichtung 4 über einen Gasauslass 5 einem T-Stück 91 zugeführt wird, wo es zu einer Mischung mit der Ansaugluft 9 kommt, die üblicherweise über einen Luftfilter in den Ansaugstutzen 6 des Kraftfahrzeuges angesaugt wird. Das so erzeugte Mischgas wird über den kraftfahrzeugseitig vorhandenen Ansaugkrümmer 11 zusammen mit der Ansaugluft in den Verbrennungsmotor 7 eingespeist.

Im Auspufftrakt des Verbrennungsmotors 7 ist ein Abgasstutzen 12 angeordnet, in dem eine Lambda-Sonde 14 angeordnet ist, welche den Anteil von Kohlendioxid erfasst und über eine Signalleitung 15 der Steuerung 86 für den Gasgenerator 1 einspeist. Damit kann die Gaserzeugung des Gasgenerators 1 in Abhängigkeit von der Zusammensetzung des Abgases geregelt werden.

In an sich bekannter Weise strömt dann das fahrzeugseitig noch weiter gereinigte Abgas in Pfeilrichtung 13 aus dem Auspuff, wobei die Kohlenmonoxid- und Kohlendioxidanteile wesentlich vermindert sind und durch die Zuführung des Mischgases in die Verbrennungsluft die Leistungsbilanz des Verbrennungsmotors 7 wesentlich verbessert wird.

In Figur 2 ist das Verfahrensschema zum Betrieb eines solchen Gasgenerators 1 dargestellt, wobei die Elektrolysezelle 20 wesentlicher Teil des Gasgenerators 1 ist. In die Elektrolysezelle 20 wird eine Elektrolytflüssigkeit 79 im Kreislauf hinein und hinaus gefördert, wobei ausgehend vom Zirkulationsauslass 50 eine Leitung 70 anschließt, in welcher ein Zumisch-Ventil 82 angeordnet ist, über welches Frischwasser über eine Pumpe 83 aus einer Leitung 69 eines mit Wasser befüllten Vorratstanks 62 entnommen wird, in dem füllstandgesteuert Wasser 19 vorrätig gehalten wird.

Das aus dem Auslass 74 einer der Elektrolysezelle 20 nachgeschalteten Behandlungsvorrichtung 73 entnommene Wasser wird über die Rückflussleitung 64 in den Rücklaufanschluss 84 des Vorratstanks 62 geleitet, dessen Füllstand sensorgesteuert geregelt ist. Dazu ist das Ventil 65 vorgesehen, das den Füllstand 85 in der Behandlungsvorrichtung 73 regelt.

Es sind eine Reihe von elektrischen Anschlussleitungen, Steuerleitungen und Signalbusleitungen einer zentralen Steuerung vorhanden, die nachfolgend beschrieben werden. Dabei führt die Steuerung auch Regelvorgänge aus, sodass der Begriff Steuerung 86 nicht einschränkend zu verstehen ist.

Die zentrale Steuerung 86 wird eingangsseitig von einem fahrzeuggebundenen Stromanschluss 68 mit dem fahrzeugseitig erzeugten Strom nur dann versorgt, wenn der Motor des Kraftfahrzeuges mindestens im Leerlauf läuft.

An einem Signaleingang der zentralen Steuerung 86 liegt auch das Signal der Lambda-Sonde 14 an.

Die zentrale Steuerung 86 steuert über geeignete Steuerleitungen 66 die Pumpe 83 an, mit der Frischwasser über das Ventil 82 in die Leitung 70 gepumpt wird, und ferner steuert die Steuerung 86 über die Steuerleitung 66 die Pumpe 87 an, welche die Elektrolytflüssigkeit 79 im Kreislauf über die Leitung 70 umpumpt und über die Leitung 71 wieder in die Elektrolysezelle 20 und den Zirkulationseinlass 34 zurück fördert.

Es ist lediglich schematisiert dargestellt, dass am Vorratstank 62 ein Deckel mit Entlüftung vorhanden ist und ebenfalls ein Füllstandsensor zur Regelung des Füllstandes vorhanden ist.

Die Steuerung 86 erhält weitere Signale über einen Signalbus 67, über den die Signale eines zellenseitigen Füllstandsensors, eines Druckschalters und eines Temperaturwächters der Elektrolysezelle 20 geführt sind.

Der Signalbus 67 ist auch mit dem Füllstandsensor der nachgeschalteten Behandlungsvorrichtung 73 gekoppelt. Ebenso wird die Gaspumpe 78 über die Leitung 66 gesteuert, um das aus der Behandlungsvorrichtung 73 gewonnene Gas geregelt über den Gasauslass 5 der Gaspumpe 78 in den Ansaugkrümmer 11 des Verbrennungsmotors 7 einzuspeisen.

Es wird dabei bevorzugt, wenn alle Elemente, die in Figur 2 gezeigt sind, insbesondere der Vorratstank 19 und die Elektrolysezelle 20 auf einer gemeinsamen Bodenplatte 63 vibrationsgesichert befestigt sind und diese Bodenplatte dann in einen festen Einbauraum im Kraftfahrzeug eingebaut wird.

Damit besteht der Vorteil, dass die flüssigkeitsleitenden Rohre nunmehr als feste bruchgesicherte Verrohrungen ausgeführt werden können, nämlich bevorzugt die Leitungen 69, 70, 71, 64, was ebenfalls der Betriebs- und Explosionssicherheit dient. Je nach Einbausituation kann es auch vorgesehen sein, dass nur die Elektrolysezelle 20 auf der Bodenplatte 63 befestigt ist und die anderen Komponenten des Systems, nämlich der Vorratstank 19 und die Behandlungsvorrichtung 73 durch Rohre getrennt in anderen Einbauräumen des Kraftfahrzeuges eingebaut sein. In einer solchen Einbausituation wird es bevorzugt, wenn die Verbindungsrohre durch ummantelte, druckgesicherte Schläuche gebildet sind. Es entstehen dadurch keine Sicherheitsprobleme, denn die Elektrolyseflüssigkeit ist in dem Mehrkammer-System enthalten und ist dort gegen Auslaufen geschützt.

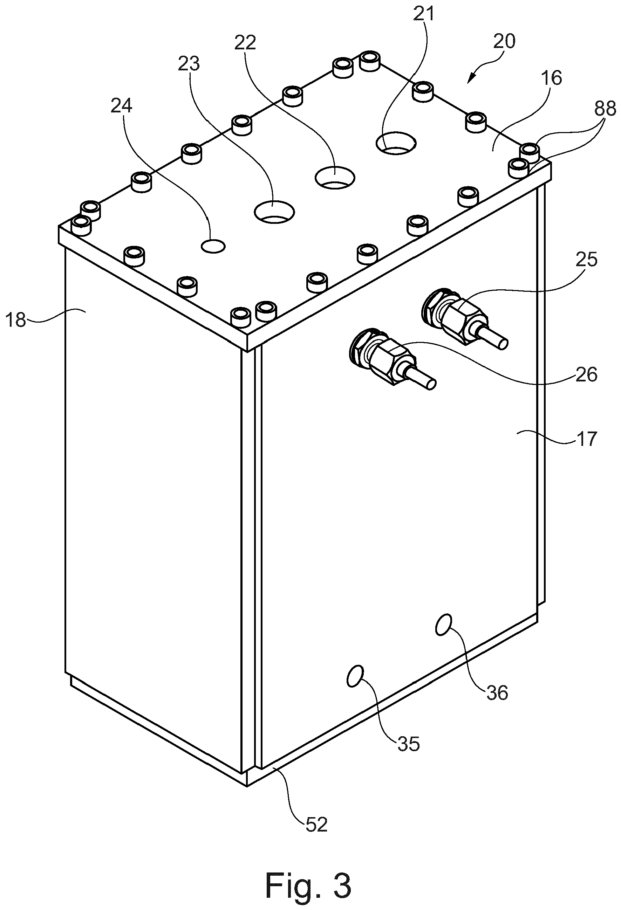

Eine besonders explosionsgesicherte Elektrolysezelle 20 ist in Figur 3 dargestellt. Sie besteht aus einem kastenförmigen Edelstahlgehäuse mit zueinander parallelen Seitenwänden 18, einer Frontwand 17 und einer gleichartigen, nicht näher dargestellten Rückwand, die alle zu einem geschlossenen nach oben offenen gasdichten Gefäß verschweißt sind, welches aus einem Edelstahlmaterial besteht.

Statt einem kastenförmigen, explosionsdruckfesten Gehäuse kann in einer anderen Ausführung auch ein topf- oder zylinderförmiges Gehäuse vorgesehen sein.

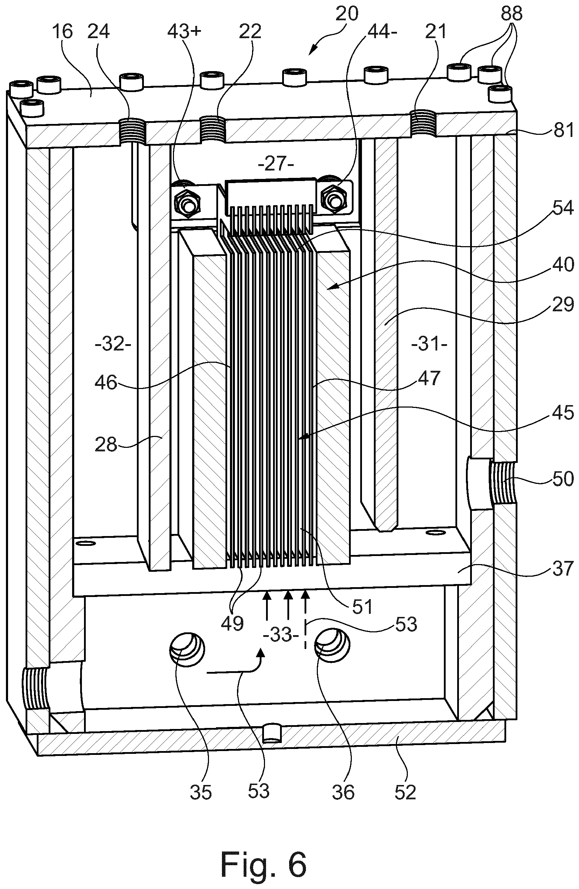

Im Verbindungsbereich zwischen diesem nach oben offenen gasdichten und explosionsgesicherten kastenförmigen Edelstahlgehäuse ist eine Deckplatte 16 mit Befestigungsschrauben 88 aufgeschraubt, wobei im Übergangsbereich zwischen der Unterseite der Deckplatte 16 und der umlaufenden Anschlussseite des kastenförmigen Gehäuses gemäß Figur 6 eine verschleißfeste Dichtung 81 aus einem besonderen Kunststoffmaterial oder Kompositstoffen, die unter anderem Polytetrafluorethylen enthalten können, angeordnet ist, sodass eine hohe Druckdichtigkeit bei einer eventuell eintretenden Explosion gegeben ist.

In die Frontwand 17 münden die beiden elektrischen Anschlüsse 25, 26, wobei der eine Anschluss, z. B. der Pluspol und der andere Anschluss, der Minuspol, einer Gleichstromversorgung sein können. Bevorzugt wird die Stromquelle durch die kraftfahrzeugseitige Lichtmaschine gebildet.

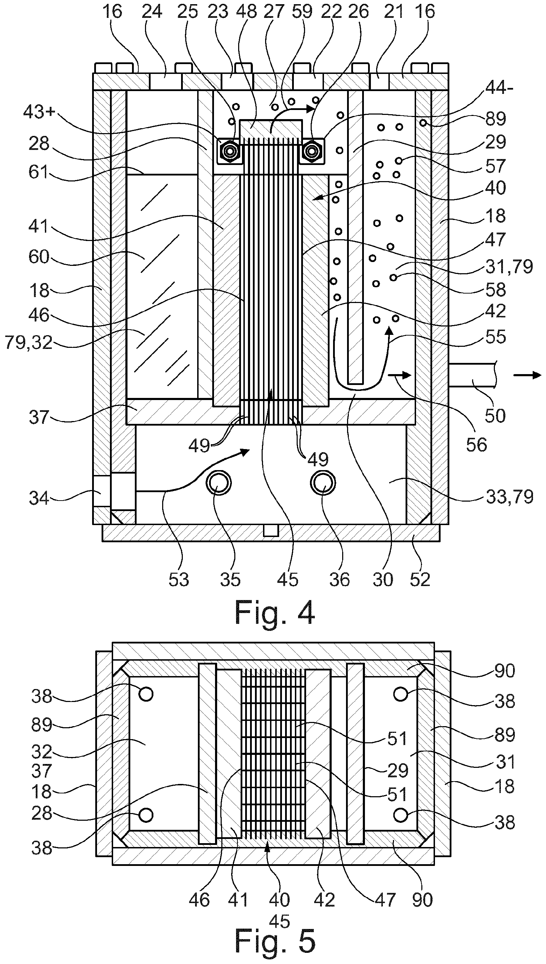

Ferner münden in die Frontwand 17 flüssigkeitsleitende Anschlussbohrungen 35, 36, deren Bedeutung anhand der Figur 4 noch näher beschrieben wird.

An den Anschlussbohrungen 35, 36, welche in die in Figur 4 gezeigte Bodenkammer 33 münden, sind nicht näher dargestellte Konditioniervorrichtungen für die Vorbehandlung der Elektrolytflüssigkeit eingeschraubt, bevor diese in das Plattenpaket 45 des Elektrolyseblocks 40 einfließt.

In der Deckplatte 16 ist gemäß Figur 3 eine erste Anschlussbohrung 21 angeordnet, über welche das gewonnene Gas in die in Figur 2 dargestellte Leitung 72 einfließt. An der Anschlussbohrung 22 ist ein Drucksensor und an der Anschlussbohrung 23 ist ein Temperatursensor angeschlossen. Die Anschlussbohrungen 21, 22, 23, 24 münden in die zugeordneten Kammern 27, 31, 32 der Elektrolysezelle 20, wie dies in Figur 4 dargestellt ist.

Über die Anschlussbohrung 24 erfolgt die Erfassung des Füllstandes mit einem Füllstandsensor in der Vorratskammer 32.

Die entsprechenden, hier nicht dargestellten Sensoren sind gemäß Figur 2 mit dem Signalbus 67 verbunden und deren Signale werden in die Steuerung 86 eingespeist.

Nach einem bevorzugten Merkmal der Erfindung ist es vorgesehen, dass eine 3-Kammer-Ausführung der Elektrolysezelle 20 gegeben ist. Eine der drei Kammern ist die zentrale Elektrolysekammer 27, in welcher die stromgestützte Elektrolyse des in der Elektrolysekammer befindlichen und füllstandgesteuerten Wassers mithilfe eines Elektrolyseblocks 40 stattfindet.

In der Oberseite der Elektrolysekammer 27 sind Anschlusslaschen für den elektrischen Anschluss des Plattenpaketes 45 angegeben, und zwar dient die Anschlusslasche 43 z. B. als Pluspol für alle parallel geschalteten Anodenplatten und die Anschlusslasche 44 als Minuspol für alle parallel geschalteten Kathodenplatte für die gesamte Stromversorgung des Plattenpaketes 45 mit einem geeigneten Gleichstrom. Die jeweils gegensätzlich gepolten Platten sind in dichtem Abstand elektrisch isoliert in dem Elektrolyseblock 40 befestigt und die Plattenzwischenräume sind von der ständig im Kreislauf umgepumpten Elektrolyseflüssigkeit durchströmt. Die Platten können dabei gerade oder gewellt ausgebildet sein.

Der Elektrolyseblock 40 ist zwischen zwei einander gegenüberliegenden und elektrisch isolierten Zellwänden 41, 42 aufgenommen, wobei die bevorzugt aus Kunststoff bestehenden Zellwände 41, 42 verschiebungsgesichert und mit besonderen Hinterschneidungen in einander zugeordneten und zueinander parallelen aus isolierendem Kunststoff bestehenden Führungsplatten 90 aufgenommen sind, die an der Innenseite des Gehäuses formschlüssig anliegen.

Die zueinander parallelen Führungsplatten 90 sind über geeignete, lastübertragende Gehrungen mit den hierzu um 90° versetzten Führungsplatten 89 verbunden, die ebenfalls aus einem geeigneten elektrisch isolierenden Kunststoffmaterial bestehen.

Somit ergibt sich, dass der gesamte Elektrolyseblock 40 mit dem Plattenpaket 45 elektrisch isoliert zwischen den Zellwänden 41, 42 aufgenommen ist und die Zellwände 41, 42 ihrerseits fest und nicht verschiebbar in den einander gegenüberliegenden elektrisch isolierten Führungsplatten 90 aufgenommen sind.

Die Elektrolyseflüssigkeit wird über den Zirkulationseinlass 34 in die Bodenkammer 33 eingeführt und strömt in Pfeilrichtung 53 an die Unterseite des Plattenpaketes 45, und zwar in dort angeordnete Speisebohrungen 49, die zwischen den einzelnen elektrisch isoliert voneinander angeordneten Platten zwischen einander gegenüberliegenden Anoden- und Kathodenplatten 46, 47 angeordnet sind.

Im Zwischenraum zwischen den elektrisch isoliert voneinander angeordneten Anoden- und Kathodenplatten 46, 47 kommt es zu der beabsichtigten Elektrolyse aus dem Wasser, wodurch Gasblasen mit einem Mischgas aus Sauerstoff und Wasserstoff entstehen.

Die Oberseite des Plattenpakets 45 wird abstandshaltend und elektrisch isoliert in einem Distanzkamm 48 gehalten, um zu vermeiden, dass sich die auf Abstand gehaltenen Platten 46, 47 gegenseitig berühren.

Die bei der Elektrolyse im Plattenpaket 45 entstehenden Gasblasen steigen in Pfeilrichtung 49 in der Elektrolysekammer 27 auf.

Die Elektrolysekammer ist bodenseitig flüssigkeitsleitend mit der im Schnitt der Figur 4 linksseitig angeordneten Vorratskammer 32 verbunden, in welcher mit sensorgeregeltem Füllstand 61 die Wasser + Elektrolyse-Füllung vorrätig gehalten wird. Somit ist stets der gleiche Flüssigkeitsstand in der Vorratskammer 32 und der Elektrolysekammer 27 vorhanden.

Um zu vermeiden, dass die in der Elektrolysekammer 27 entstehenden Gasblasen in die Vorratskammer 32 gelangen, ist ein Siphonprinzip vorgesehen, was bedeutet, dass lediglich eine hydrostatische Verbindung zwischen dem Füllstand der Elektrolyseflüssigkeit 79 in der Elektrolysekammer 27 und der Vorratskammer 36 über die bodenseitige Bodenkammer 33 erfolgt.

Damit ist ein druckdichter Abschluss der Elektrolysekammer 27 gewährleistet, so dass die dort entstehenden Gasblasen aufgrund des Gasdruckes in eine gasdicht an die Elektrolysekammer anschließende Gaswäscherkammer 31 geleitet werden können, wodurch die Gasblasen - wie gezeigt - in Pfeilrichtung 55 zunächst eine siphonartig trennende Seitenwand 29 umströmen, die an ihrem unteren Ende einen Durchlass 30 für die Gasblasen bildet, so dass die Gasblasen durch den Durchlass 30 hindurchströmen, aber das Wasser immer auf einem hydrostatischen Gleichgewicht entsprechend dem Füllstand 61 in der Vorratskammer 32 gehalten wird.

Es entstehen in der Gaswäscherkammer 31 zusammen mit den Gasblasen 57 auch noch Schaumblasen 58, die in der Gaswäscherkammer schon zum größten Teil beseitigt werden. Zu diesem Zweck kann es in einer weiteren bevorzugten Ausführung vorgesehen sein, dass in der Gaswäscherkammer 30 mehrere, zueinander parallele, horizontale und einen gegenseitigen Abstand zueinander einnehmende Siebe angeordnet sind, deren Siebgröße so bemessen ist, dass die entstehenden Schaumblasen an den Siebporen zerbersten und die Gasanteile hindurchströmen.

In einer nachfolgenden Behandlungsvorrichtung 73 erfolgt dann eine vollständige Entfernung der Schaumblasen 58, sodass diese aus dem Zirkulationskreislauf 70, 71, 82, 87 heraus genommen sind.

Der in der Elektrolysekammer 27 entstehende Schaum wird in der Gaswäscherkammer 31 durch den Siphoneffekt der bodenseitig umströmten Seitenwand 29 gewaschen, damit der Elektrolyt zurückbleibt, und über die Anschlussbohrung 21 entweicht eine Mischung aus Gas und Wasserdampf. In der nachgeschalteten Behandlungsvorrichtung 73 wird der Wasserdampfanteil entfernt, so dass nur noch Gasblasen aus dem gewonnenen Mischgas übrigbleiben.

Die in dem Gehäuse der Elektrolysezelle 20 integrierte Gaswäscherkammer 31 hat demnach den Vorteil, dass unter explosionsgeschützten Bedingungen eine Abtrennung von Schaumblasen und Gasblasen erfolgt und die Elektrolyseflüssigkeit damit gewaschen wird und das Elektrolyt in der Reaktionseinheit der Elektrolysezelle 20 zurückbleibt und nicht nach außen geführt werden muss, wie es beim Stand der Technik teilweise der Fall ist.

Die Elektrolytflüssigkeit 79 wird über den Zirkulationsauslass 50 gemäß der Figur 2 über die Leitung 70 zurückgeführt, so dass eine Kreislaufführung unter Einwirkung der Pumpe 87 und des Ventils 82 gegeben ist.
Die hermetisch dichte Seitenwand 28 in der Gaswäscherkammer 31 besteht aus einem geeigneten Kunststoffmaterial und verhindert, dass der Schaum von der Elektrolysekammer 27 in die Vorratskammer 32 gelangt.

Von besonderem Vorteil ist, dass der gesamte Elektrolyseblock 40 auf einer Bodenplatte 37 integriert ist, die elektrisch isolierend ausgebildet ist und die mit den elektrisch isolierten Führungsplatten 89 verbunden ist.

Damit ergibt sich ein besonders druckdichter, verwindungssteifer und fester Einbau des Elektrolyseblocks 40 im Gehäuse der Elektrolysezelle 20.

Aus Figur 5 ist in Verbindung mit Figur 4 zu entnehmen, dass die flüssigkeitsleitende Verbindung zwischen der Bodenkammer 33 und der Vorratskammer 32 durch in der Bodenplatte 37 angeordnete Ausgleichsbohrungen 38 erfolgt.

Die gleichen Ausgleichsbohrung 38 sind im Übrigen auch in der Gaswäscherkammer 31 angeordnet und sorgen dafür, dass im gesamten Innenraum der Elektrolysezelle 20 ein gleichbleibender Füllstand 61 beibehalten wird, der über den vorher erwähnten Füllstandsensor in Verbindung mit der Pumpe 87 und dem Ventil 82 geregelt wird.

Dadurch dass in der (bodenseitigen) Eingangsseite des Plattenpaketes 45 klein dimensionierte Speisebohrungen 49 vorhanden sind, ergibt sich der Vorteil, dass durch den permanenten, von der Pumpe 87 über den Zirkulationseingang 34 gespeisten Fluss der Elektrolyseflüssigkeit 79 die gesamte Reaktionsfläche aller Platten des Plattenpaketes 45 ständig mit Elektrolyseflüssigkeit neu belegt wird, was dem ständigen pumpengesteuerten Durchfluss zu verdanken ist, der beim Stand der Technik fehlt. Damit kann die Leistung bei der Gaserzeugung wesentlich gesteigert werden. Durch die Anordnung der Speisebohrungen 49 in der elektrisch isolierten Bodenplatte 37 wird der Vorteil erreicht, dass eine elektrische Kurzschlussverbindung zwischen den einzelnen Schlitzen der Platten des Platenpakets vermieden wird.

Beim Stand der Technik kommt es in unerwünschter Weise zu einer Häufung von Gasblasen in der Mitte des Elektrolyseblocks, weil eine pumpengetriebene Förderung der Elektrolytflüssigkeit 79 fehlt. Damit ist der Wirkungsgrad einer solchen bekannten Elektrolyseeinheit schlecht, und durch die pumpengesteuerte Umwälzung der Elektrolytflüssigkeit wird ein wesentlich besserer Wirkungsgrad auf kleinerem Raumvolumen erreicht. Gemäß Figur 5 bilden die einzelnen Platten des Plattenpaketes 45 mit dazwischenliegenden Speisebohrungen 49 Durchflussschlitze 51, um so eine besonders großflächige Elektrolysefläche bereit zu stellen.

Das Gehäuse gemäß Figur 3 und Figur 4 wird im Übrigen durch eine Bodenplatte 52 nach unten abgeschlossen, die ebenfalls aus einem Edelstahlmaterial besteht und fest mit dem daran anschließenden Front-, Rück- und Seitenwänden verschweißt ist.

Aufgrund der Siphonwirkung in der Gaswäscherkammer 31 mit der lediglich den unteren Bodenbereich freilassenden Seitenwand 29 kommt es zu einer Bildung von Gasblasen 57, die in Pfeilrichtung 55 aus der Anschlussbohrung 21 strömen. Die Schaumblasen 58 wurden dabei schon weitestgehend entfernt.

Gemäß der Figur 2 schließt an die Anschlussbohrung 21 eine Gasleitung 22 an, die in eine Anschlussbohrung in einer nachgeschalteten Behandlungsvorrichtung 73 einmündet.

In der Behandlungsvorrichtung 73 ist im Wesentlichen ein Tauchrohr 76 angeordnet, durch welches die Mischung aus Gasblasen und Wasserdampfanteilen in Richtung auf die Bodenseite durch das Wasserbad strömt, wobei es zu einer Abtrennung zwischen den Gasblasen und den Wasseranteilen kommt, wodurch sich der Wassergehalt des Wassers 19 in der Behandlungsvorrichtung 73 erhöht. Der Füllstand 85 wird dabei stets durch einen nicht näher dargestellten Füllstandsensor auf gleichem Niveau geregelt.

In dem durch das Wasser 19 gebildeten Wasserbad 75 folgt demnach eine Abscheidung der Wasserdampfanteile, so dass sich im oberen Gasraum 80 nur noch Gas ansammelt und von einer über die Leitung 66 angesteuerten Gaspumpe 78 über den Gasanschluss 77 entnommen werden kann. Das so gereinigte Mischgas wird über den Gasauslass 5 in den Ansaugkrümmer 11 einer Verbrennungskraftmaschine eingespeist.

Die Steuerung 86 gewährleistet einen dynamischen Betrieb der gesamten Anordnung durch von dem Fahrzeugbetrieb abhängige Regelung der Pumpen 87 und 78 und der Strombeaufschlagung des Plattenpakets45.

Eine Regelung der Strombeaufschlagung des Plattenpaketes 45 im Elektrolyseblock 40 sichert bei dynamischem Motorverhalten, wie z. B. Beschleunigungen des Motors, dass in vorteilhafter Weise die für diesen Betriebszustand optimalen Gasmengen zur Verfügung gestellt werden.
Somit werden in die Steuerung/Regelung 86 auch die fahrdynamischen Parameter des Kraftfahrzeuges eingespeist.

Selbstverständlich wird die Steuerung/Regelung 86 auch die Gasbildung im Elektrolyseblock 40 herunterregeln, sobald der Verbrennungsmotor im Leerlauf arbeitet, um so eine übermäßige Gasbildung zu vermeiden.

Die Figur 6 ist eine perspektivische Darstellung der Schnittzeichnung nach Figur 4, wobei die gleichen Teile mit den gleichen Bezugszeichen versehen sind.

Die Pumpe 83 sorgt für eine Nachfüllung von Frischwasser in den Elektrolyseblock 40 der Elektrolysezelle 20. Sie entnimmt aus dem bevorzugt drucklosen Vorratstank 62 das Wasser 19 und speist es mit Überdruck über das Ventil 82 in den Zirkulationskreislauf 70, 71.

Die bereits schon erwähnte Pumpe 87 sorgt für den druckgesteuerten Umlauf der Elektrolytflüssigkeit 79 in die Elektrolysezelle 20 und dieser heraus.

Ein besonders druckdichter Aufbau ergibt sich bei dem Gehäuse der Elektrolysezelle 20 dann, wenn die Deckwand 16 mit geeigneten Befestigungsschrauben 88 mit den umlaufenden, in sich verschweißten und kasten- oder topfförmigen Gehäuse verbunden wird.

Aus Figur 6 ergibt sich, dass die Oberseite der einzelnen Platten des Plattenpaketes 45 in horizontaler Richtung ausgeschnitten sind und somit einen Plattenausschnitt 54 bilden, sodass sich der Füllstand 61 in genauer Höhe des Plattenausschnittes 54 bewegt, um die gesamte Fläche des Plattenpaketes 45 für die Elektrolyse zugänglich zu machen und den dabei entstehenden Schaum abfließen zu lassen.

Durch die Mehrkammer-Ausbildung der Elektrolysezelle 20 mit einer darin integrierten Schaumbeseitigung in der Zelle selbst und durch eine pumpengesteuerte Zirkulation ergibt sich der Vorteil eines hohen Wirkungsgrades, eine hohen Explosionssicherheit und eine optimale Betriebssicherheit.

Der Wirkungsgrad der Elektrolyse kann noch dadurch gesteigert werden, dass in der Bodenkammer 33 und die dort angegebenen Anschlussbohrungen 35, 36 Konditionierungsvorrichtungen eingeschraubt werden können, wie z. B. Piezoelemente zur Schwingungsanregung der Elektrolytflüssigkeit 79 und/oder Magneteinrichtungen zur magnetischen Vorbehandlung der Elektrolytflüssigkeit 79 und/oder gegebenenfalls UV-Lichtgeneratoren zur Ionisierung der Elektrolytflüssigkeit in der Bodenkammer 33.

Die der Elektrolysezelle 20 angeordneten Sensoren, nämlich der Füllstandsensor 93, der Druckschalter 94 und der Temperaturschalter 95 überwachen einen geordneten Betrieb der Elektrolysezelle 20 und geben im Notfall das Signal zur Sofort-Abschaltung der Gaserzeugung.

### Zeichnungslegende

- 1: Gasgenerator
- 2: Pfeilrichtung
- 3: Einfüllstutzen
- 4: Pfeilrichtung
- 5: Gasauslass
- 6: Ansaugstutzen
- 7: Verbrennungsmotor
- 8: Pfeilrichtung
- 9: Ansaugluft
- 10: Luftfilter
- 11: Ansaugkrümmer
- 12: Abgasstutzen
- 13: Pfeilrichtung
- 14: Lambda-Sonde
- 15: Signalleitung
- 16: Deckplatte
- 17: Frontwand
- 18: Seitenwand
- 19: Wasser
- 20: Elektrolysezelle
- 21: Anschlussbohrung (Gas)
- 22: Anschlussbohrung (Druck)
- 23: Anschlussbohrung (Temperatur)
- 24: Anschlussbohrung (Füllstand)
- 25: Elektrischer Anschluss
- 26: Elektrischer Anschluss
- 27: Elektrolysekammer
- 28: Seitenwand
- 29: Seitenwand
- 30: Durchlass
- 31: Gaswäscherkammer
- 32: Vorratskammer
- 33: Bodenkammer
- 34: Zirkulationseinlass
- 35: Anschlussbohrung
- 36: Anschlussbohrung
- 37: Bodenplatte
- 38: Ausgleichsbohrung
- 39 40: Elektrolyseblock
- 41: Zellwand
- 42: Zellwand
- 43: Anschlusslasche (+)
- 44: Anschlusslasche (-)
- 45: Plattenpaket
- 46: Anodenplatte
- 47: Kathodenplatte
- 48: Distanzkamm
- 49: Speisebohrung
- 50: Zirkulationsauslass
- 51: Durchflussschlitz
- 52: Bodenplatte
- 53: Pfeilrichtung
- 54: Plattenausschnitt
- 55: Pfeilrichtung
- 56: Pfeilrichtung
- 57: Gasblasen
- 58: Schaumblasen
- 59: Pfeilrichtung
- 60: Wasser + Elektrolyt-Füllung
- 61: Füllstand
- 62: Vorratstank
- 63: Bodenplatte
- 64: Rückflussleitung
- 65: Ventil
- 66: Steuerleitung
- 67: Signalbus
- 68: Stromanschluss
- 69: Leitung
- 70: Leitung
- 71: Leitung
- 72: Gasleitung
- 73: Behandlungsvorrichtung
- 74: Auslass
- 75: Wasserbad
- 76: Tauchrohr
- 77: Gasanschluss
- 78: Gaspumpe
- 79: Elektrolytflüssigkeit
- 80: Gasraum
- 81: Dichtung
- 82: Ventil
- 83: Pumpe
- 84: Rücklaufanschluss
- 85: Füllstand
- 86: Steuerung
- 87: Pumpe
- 88: Befestigungsschraube
- 89: Führungsplatte
- 90: Führungsplatte
- 91: Pfeilrichtung
- 92: T-Stück
- 93: Füllstandsensor
- 94: Druckschalter
- 95: Temperaturschalter

## Patentansprüche

1. Vorrichtung zur Anreicherung der Ansaugluft (9) von Verbrennungsmotoren durch Einführung eines aus einer Elektrolysezelle (20) gewonnenen Mischgases das aus Wasserstoff und/oder Sauerstoff besteht, das in den Luft-Ansaugstutzen (6) des Verbrennungsmotors einleitbar ist, wobei die Elektrolysezelle (20) mindestens eine mit einer Elektrolytflüssigkeit gefüllte Elektrolysekammer (27) mit mindestens einem bestromten Plattenpaket (45) aufweist, deren Gasauslass in eine Gaswäscher-Kammer (31) mündet und wobei der Füllstand (61) in der Elektrolysezelle (20) mit einer im Gehäuse angeordneten Flüssigkeits-gefüllten Vorratskammer (32) geregelt ist, **dadurch gekennzeichnet, dass** mindestens die Elektrolysekammer (27), die Gaswäscherkammer (31) und die Vorratskammer (32) in einem gegen den Berstdruck einer internen Explosion geschützten Metall- oder faserverstärktem Kunststoffgehäuse (16, 17, 18, 52) aufgenommen sind.

2. Vorrichtung nach Anspruch 1, **dadurch gekennzeichnet, dass** im Gehäuse (16, 17, 18, 52) zusätzlich eine flüssigkeitsgefüllte Bodenkammer (33) angeordnet ist, welche in flüssigkeitsleitender Verbindung mit der jeweiligen Bodenseite der Vorratskammer (32) und der Elektrolysekammer (27) ist.

3. Vorrichtung nach Anspruch 1 oder 2, **dadurch gekennzeichnet, dass** der Gasauslass der Gaswäscherkammer (31) mit der Eingangsseite einer nachgeschalteten Behandlungsvorrichtung (73) verbunden ist, die außerhalb des Gehäuses (16, 17, 18, 52) angeordnet ist.

4. Vorrichtung nach einem der Ansprüche 1 bis 3, **dadurch gekennzeichnet, dass** ein Kreislaufsystem (70, 71, 82, 87) vorhanden ist, welches die Elektrolyseflüssigkeit (60) pumpengestützt im Kreislauf fördert.

5. Vorrichtung nach Anspruch 4, **dadurch gekennzeichnet, dass** eine selbsttätige Regelung des Flüssigkeitsstandes im Gehäuse (16, 17, 18, 52) der Elektrolysezelle (20) dadurch gegeben ist, dass aus einem außerhalb des Gehäuses angeordneten Vorratstank (62) Wasser (19) über eine Pumpe (83) und ein Zumischventil (82) in den Zirkulationskreislauf (70, 71, 82, 87) der Elektrolysezelle (20) zuführbar ist.

6. Vorrichtung nach einem der vorhergehenden Ansprüche 1 bis 5, **dadurch gekennzeichnet, dass** ein automatisierter, autarker Betrieb des Gasgenerators (1) durch füllstandabhängig geregelte Pumpen (83, 87) und/oder in oder an der Elektrolysezelle (20) angeordnete Sensoren (93, 94, 95) vorhanden ist.

7. Vorrichtung nach einem der vorhergehenden Ansprüche 1 bis 6, **dadurch gekennzeichnet, dass** ein automatisierter, autarker Betrieb des Gasgenerators (1) durch eine Steuerung (86) gegeben ist, welche die Gaserzeugung in Abhängigkeit von den Fahrzuständen des Kraftfahrzeugs regelt.

8. Vorrichtung nach einem der vorhergehenden Ansprüche 1 bis 7, **dadurch gekennzeichnet, dass** eine Rückführung (64, 74) von in der Behandlungsvorrichtung (73) zusätzlich entstandenem Wasser (19) in den Vorratstank (62) vorhanden ist.

9. Vorrichtung nach einem der vorhergehenden Ansprüche 1 bis 8, **dadurch gekennzeichnet, dass** die Gaserzeugung der Elektrolysezelle (20) in Abhängigkeit von der Zusammensetzung des Abgases geregelt ist.

10. Vorrichtung nach einem der vorhergehenden Ansprüche 1 bis 9, **dadurch gekennzeichnet, dass** die zentrale Steuerung (86) über Steuerleitungen (66) die Pumpe (83) ansteuert, mit der Frischwasser (19) über ein Ventil (82) in die Zirkulationsleitung (70) gepumpt wird.

11. Vorrichtung nach einem der vorhergehenden Ansprüche 1 bis 10, **dadurch gekennzeichnet, dass** die zentrale Steuerung (86) über eine Steuerleitung (66) die Pumpe (87) ansteuert, welche die Elektrolytflüssigkeit (79) im Kreislauf über die Zirkulationsleitung (70) umpumpt und über eine Leitung (71) wieder in die Elektrolysezelle (20) und den Zirkulationseinlass (34) zurück fördert.

12. Vorrichtung nach einem der vorhergehenden Ansprüche 1 bis 11, **dadurch gekennzeichnet, dass** in der Elektrolysekammer (27) ein Elektrolyseblock (40) zwischen zwei einander gegenüberliegenden und elektrisch isolierten Zellwänden (41, 42) aufgenommen ist, und dass die aus Kunststoff bestehenden Zellwände (41, 42) verschiebungsgesichert und mit besonderen Hinterschneidungen in einander zugeordneten und zueinander parallelen, aus isolierendem Kunststoff bestehenden Führungsplatten (90) aufgenommen sind, die an der Innenseite des Gehäuses (16, 17, 18, 52) formschlüssig anliegen.

13. Vorrichtung nach Anspruch 12, **dadurch gekennzeichnet, dass** die zueinander parallelen Führungsplatten (90) über geeignete, lastübertragende Gehrungen mit den hierzu um 90° versetzten Führungsplatten (89) verbunden sind, die aus einem elektrisch isolierenden Kunststoffmaterial bestehen.

14. Vorrichtung nach einem der Ansprüche 12 oder 13, **dadurch gekennzeichnet, dass** der Elektrolyseblock (40) mit dem Plattenpaket (45) elektrisch isoliert zwischen den Zellwänden (41, 42) aufgenommen ist und die Zellwände (41, 42) ihrerseits fest und nicht verschiebbar in den einander gegenüberliegenden elektrisch isolierten Führungsplatten (90) aufgenommen sind.

15. Vorrichtung nach einem der Ansprüche 1 bis 14, **dadurch gekennzeichnet, dass** die Oberseite des Plattenpakets (45) abstandshaltend und elektrisch isoliert in einem Distanzkamm (48) gehalten ist, um zu vermeiden, dass sich die auf Abstand gehaltenen Platten (46, 47) gegenseitig berühren.

16. Vorrichtung nach einem der Ansprüche 1 bis 15, **dadurch gekennzeichnet, dass** zur Vermeidung, dass die in der Elektrolysekammer (27) entstehenden Gasblasen in die Vorratskammer (32) gelangen, ein Siphonprinzip dergestalt vorgesehen ist, dass lediglich eine gasdichte hydrostatische Verbindung zwischen dem Füllstand der Elektrolyseflüssigkeit (79) in der Elektrolysekammer (27) und der Vorratskammer (36) über die bodenseitige Bodenkammer (33) besteht.

17. Vorrichtung nach einem der Ansprüche 1 bis 16, **dadurch gekennzeichnet, dass** die Gaswäscherkammer (31) nach dem Siphon-Prinzip arbeitet und die in der Elektrolysekammer entstehenden Gasblasen (57) eine die Gaswäscherkammer (31) unterteilende Seitenwand (29) bodenseitig umströmen.

18. Vorrichtung nach Anspruch 17, **dadurch gekennzeichnet, dass** der in der Elektrolysekammer (27) entstehende Schaum in der Gaswäscherkammer (31) durch den Siphoneffekt der bodenseitig umströmten Seitenwand (29) gewaschen wird.

19. Vorrichtung nach einem der Ansprüche 16 bis 18, **dadurch gekennzeichnet, dass** über eine Anschlussbohrung (21) in der Gaswäscherkammer (31) eine Mischung aus Gas und Wasserdampf entweicht und in der nachgeschalteten Behandlungsvorrichtung (73) der Wasserdampfanteil entfernt wird und den Flüssigkeitsstand der Behandlungsvorrichtung (73) vergrößert.

20. Vorrichtung nach einem der Ansprüche 1 bis 19, **dadurch gekennzeichnet, dass** der von der Pumpe (87) über den Zirkulationseingang (34) gespeisten Fluss der Elektrolyseflüssigkeit (79) die gesamte Reaktionsfläche aller Platten des Plattenpaketes (45) ständig mit Elektrolyseflüssigkeit neu belegt.

21. Vorrichtung nach einem der Ansprüche 1 bis 20, **dadurch gekennzeichnet, dass** eine vom Überdruck in der Elektrolysezelle (20) gesteuerte Zwangsabschaltung der Stromversorgung der Elektrolysezelle (20) vorhanden ist.

## Geänderte Patentansprüche

### Geänderte Patentansprüche gemäss Regel 137(2) EPÜ.

1. Vorrichtung zur Anreicherung der Ansaugluft (9) von Verbrennungsmotoren durch Einführung eines aus einer Elektrolysezelle (20) gewonnenen Mischgases das aus Wasserstoff und/oder Sauerstoff besteht, das in den Luft-Ansaugstutzen (6) des Verbrennungsmotors einleitbar ist, wobei die Elektrolysezelle (20) mindestens eine mit einer Elektrolytflüssigkeit gefüllte Elektrolysekammer (27) mit mindestens einem bestromten Plattenpaket (45) aufweist, deren Gasauslass in eine Gaswäscher-Kammer (31) mündet und wobei der Füllstand (61) in der Elektrolysezelle (20) mit einer im Gehäuse angeordneten Flüssigkeits-gefüllten Vorratskammer (32) geregelt ist, wobei mindestens die Elektrolysekammer (27), die Gaswäscherkammer (31) und die Vorratskammer (32) in einem gegen den Berstdruck einer internen Explosion geschützten Metall- oder faserverstärktem Kunststoffgehäuse (16, 17, 18, 52) aufgenommen sind, **dadurch gekennzeichnet, dass** die jeweils gegensätzlich gepolten Platten des Plattenpakets (45) in einem Elektrolyseblock (40) befestigt sind, der zwischen zwei einander gegenüberliegenden und elektrisch isolierten Zellwänden (41, 42) aufgenommen ist_und dass die Oberseite des Plattenpakets (45) abstandshaltend und elektrisch isoliert in einem Distanzkamm (48) gehalten ist¹.

2. Vorrichtung nach Anspruch 1, **dadurch gekennzeichnet, dass** im Gehäuse (16, 17, 18, 52) zusätzlich eine flüssigkeitsgefüllte Bodenkammer (33) angeordnet ist, welche in flüssigkeitsleitender Verbindung mit der jeweiligen Bodenseite der Vorratskammer (32) und der Elektrolysekammer (27) ist.

3. Vorrichtung nach Anspruch 1 oder 2, **dadurch gekennzeichnet, dass** der Gasauslass der Gaswäscherkammer (31) mit der Eingangsseite einer nachgeschalteten Behandlungsvorrichtung (73) verbunden ist, die außerhalb des Gehäuses (16, 17, 18, 52) angeordnet ist.

4. Vorrichtung nach einem der Ansprüche 1 bis 3, **dadurch gekennzeichnet, dass** ein Kreislaufsystem (70, 71, 82, 87) vorhanden ist, welches die Elektrolyseflüssigkeit (60) pumpengestützt im Kreislauf fördert.

5. Vorrichtung nach Anspruch 4, **dadurch gekennzeichnet, dass** eine selbsttätige Regelung des Flüssigkeitsstandes im Gehäuse (16, 17, 18, 52) der Elektrolysezelle (20) dadurch gegeben ist, dass aus einem außerhalb des Gehäuses angeordneten Vorratstank (62) Wasser (19) über eine Pumpe (83) und ein Zumischventil (82) in den Zirkulationskreislauf (70, 71, 82, 87) der Elektrolysezelle (20) zuführbar ist.

6. Vorrichtung nach einem der vorhergehenden Ansprüche 1 bis 5, **dadurch gekennzeichnet, dass** ein automatisierter, autarker Betrieb des Gasgenerators (1) durch füllstandabhängig geregelte Pumpen (83, 87) und/oder in oder an der Elektrolysezelle (20) angeordnete Sensoren (93, 94, 95) vorhanden ist.

7. Vorrichtung nach einem der vorhergehenden Ansprüche 1 bis 6, **dadurch gekennzeichnet, dass** ein automatisierter, autarker Betrieb des Gasgenerators (1) durch eine Steuerung (86) gegeben ist, welche die Gaserzeugung in Abhängigkeit von den Fahrzuständen des Kraftfahrzeugs regelt.

8. Vorrichtung nach einem der vorhergehenden Ansprüche 1 bis 7, **dadurch gekennzeichnet, dass** eine Rückführung (64, 74) von in der Behandlungsvorrichtung (73) zusätzlich entstandenem Wasser (19) in den Vorratstank (62) vorhanden ist.

9. Vorrichtung nach einem der vorhergehenden Ansprüche 1 bis 8, **dadurch gekennzeichnet, dass** die Gaserzeugung der Elektrolysezelle (20) in Abhängigkeit von der Zusammensetzung des Abgases geregelt ist.

10. Vorrichtung nach einem der vorhergehenden Ansprüche 1 bis 9, **dadurch gekennzeichnet, dass** die zentrale Steuerung (86) über Steuerleitungen (66) die Pumpe (83) ansteuert, mit der Frischwasser (19) über ein Ventil (82) in die Zirkulationsleitung (70) gepumpt wird.

11. Vorrichtung nach einem der vorhergehenden Ansprüche 1 bis 10, **dadurch gekennzeichnet, dass** die zentrale Steuerung (86) über eine Steuerleitung (66) die Pumpe (87) ansteuert, welche die Elektrolytflüssigkeit (79) im Kreislauf über die Zirkulationsleitung (70) umpumpt und über eine Leitung (71) wieder in die Elektrolysezelle (20) und den Zirkulationseinlass (34) zurück fördert.

12. Vorrichtung nach einem der vorhergehenden Ansprüche 1 bis 11, **dadurch gekennzeichnet, dass** die aus Kunststoff bestehenden Zellwände (41, 42) verschiebungsgesichert und mit besonderen Hinterschneidungen in einander zugeordneten und zueinander parallelen, aus isolierendem Kunststoff bestehenden Führungsplatten (90) aufgenommen sind, die an der Innenseite des Gehäuses (16, 17, 18, 52) formschlüssig anliegen.

13. Vorrichtung nach Anspruch 12, **dadurch gekennzeichnet, dass** die zueinander parallelen Führungsplatten (90) über geeignete, lastübertragende Gehrungen mit den hierzu um 90° versetzten Führungsplatten (89) verbunden sind, die aus einem elektrisch isolierenden Kunststoffmaterial bestehen.

14. Vorrichtung nach einem der Ansprüche 12 oder 13, **dadurch gekennzeichnet, dass** der Elektrolyseblock (40) mit dem Plattenpaket (45) elektrisch isoliert zwischen den Zellwänden (41, 42) aufgenommen ist und die Zellwände (41, 42) ihrerseits fest und nicht verschiebbar in den einander gegenüberliegenden elektrisch isolierten Führungsplatten (90) aufgenommen sind.

15. Vorrichtung nach einem der Ansprüche 1 bis 14, **dadurch gekennzeichnet, dass** zur Vermeidung, dass die in der Elektrolysekammer (27) entstehenden Gasblasen in die Vorratskammer (32) gelangen, ein Siphonprinzip vorgesehen ist, dass eine gasdichte hydrostatische Verbindung zwischen dem Füllstand der Elektrolyseflüssigkeit (79) in der Elektrolysekammer (27) und der Vorratskammer (36) über die bodenseitige Bodenkammer (33) besteht.

16. Vorrichtung nach einem der Ansprüche 1 bis 15, **dadurch gekennzeichnet, dass** Elektrolyseflüssigkeit ausgehend von der Bodenkammer (33) durch in der bodenseitigen Eingangsseite des Plattenpaketes (45) klein dimensionierte Speisebohrungen (49) strömt, die zwischen zwischen einander gegenüberliegenden Anoden- und Kathodenplatten (46, 47) angeordnet sind².

17. Vorrichtung nach einem der Ansprüche 1 bis 16, **dadurch gekennzeichnet, dass** die Gaswäscherkammer (31) nach dem Siphonprinzip arbeitet und die in der Elektrolysekammer entstehenden Gasblasen (57) eine die Gaswäscherkammer (31) unterteilende Seitenwand (29) bodenseitig umströmen.

18. Vorrichtung nach Anspruch 17, **dadurch gekennzeichnet, dass** der in der Elektrolysekammer (27) entstehende Schaum in der Gaswäscherkammer (31) durch den Siphoneffekt der bodenseitig umströmten Seitenwand (29) gewaschen wird.

19. Vorrichtung nach einem der Ansprüche 16 bis 18, **dadurch gekennzeichnet, dass** über eine Anschlussbohrung (21) in der Gaswäscherkammer (31) eine Mischung aus Gas und Wasserdampf entweicht und in der nachgeschalteten Behandlungsvorrichtung (73) der Wasserdampfanteil entfernt wird und den Flüssigkeitsstand der Behandlungsvorrichtung (73) vergrößert.

20. Vorrichtung nach einem der Ansprüche 1 bis 19, **dadurch gekennzeichnet, dass** der von der Pumpe (87) über den Zirkulationseingang (34) gespeisten Fluss der Elektrolyseflüssigkeit (79) die gesamte Reaktionsfläche aller Platten des Plattenpaketes (45) ständig mit Elektrolyseflüssigkeit neu belegt.

21. Vorrichtung nach einem der Ansprüche 1 bis 20, **dadurch gekennzeichnet, dass** eine vom Überdruck in der Elektrolysezelle (20) gesteuerte Zwangsabschaltung der Stromversorgung der Elektrolysezelle (20) vorhanden ist.
